# EUROPEAN PATENT APPLICATION

(11) **EP 1 715 220 A2**
(43) Date of publication of application: **25.10.2006**
(21) Application number: 06112600.9
(22) Date of filing: 13.04.2006
(51) Int. Cl.: F16H 59/04

(54) **Hand-operated gear shift device for a motor vehicle gearbox**

(30) Priority: 14.04.2005 IT TO20050248
(71) Applicant: SILA HOLDING INDUSTRIALE SPA, 10042 Nichelino (Torino) (IT)
(72) Inventor: Melis, Salvatore, I-10098, Rivoli (Torino) (IT); Pellegrini, Giuseppe, I-10098, RIivoli (Torino) (IT)
(74) Representative: Rondano, Davide

(57) **Abstract**

The device comprises a gear shift lever (16) which is supported on a stationary support casing (12) and includes a rod (18) having an upper straight section, an upper sleeve (24) fixed to the upper straight section of the rod (18), and a lower sleeve (26) mounted on the upper straight section of the rod (18) so that it can slide between a lower end-travel position and an upper end-travel position. The lower sleeve (26) is provided with a male stop element (34) arranged to releasably engage a female stop element (36) provided on the stationary support casing (12), in such a manner as to lock the gear shift lever (16) in a predetermined reference position. According to the invention, the lower sleeve (26) is arranged to rotate between a first angular position, in which the male stop element (34) is aligned with the female stop element (36) in the vertical direction of sliding of the lower sleeve (26), and a second angular position, in which the male stop element (34) is rotated 90 degrees relative to the female stop element (36). The movement of the lower sleeve (26) from the reference position to the normal operating position of the gear shift lever (16) thus consists of both a translation and of a rotation.

## Description

The present invention relates to a hand-operated gear shift device for a motor-vehicle gearbox, comprising a gear shift lever and a lever support casing intended to be fixed in the passenger compartment of the motor vehicle, generally in the middle tunnel between the two front seats. More particularly, the invention relates to a locking mechanism for releasably locking the gear shift lever in a given reference or adjustment position in order to allow setting operations on the gear shift device to be performed during the assembly of the motor vehicle and, thereafter, during possible servicing or repairing interventions.

An example of a gear shift device of the above-identified type is illustrated in German Patent Application DE 100 12 382. According to this known example, in order to ensure the locking of the gear shift lever in the given reference position, a lower sleeve is mounted on the lever so as to slide axially and carries a dog arranged for insertion into a corresponding seat provided in a stationary lever support casing. Two guide members disposed on diametrically opposite sides and comprising each a pair of parallel branches, which are downwardly inclined on the same side of a vertical axis, and a vertical branch, which connects the two branches at an end thereof, are formed on the outer surface of the sliding sleeve. The two guide members co-operate with respective engagement members formed at the ends of a pair of braces which extend vertically downwards from a stationary upper sleeve of the lever. A spring which biases the lower sleeve downwards is interposed between the stationary upper sleeve and the sliding lower sleeve. In the normal operating condition, the lower sleeve is held in a raised position against the force of the spring by virtue of the co-operation of the engagement members with the guide elements. The dog is thus prevented from engaging into its seat in the stationary support casing. On the other hand, upon disengagement of the guide elements from the engagement members the lower sleeve is urged downwards by the force of the spring until it reaches a reference position, in which the dog is inserted into the respective seat and the movement of the lever is therefore inhibited. The spring thus ensures that the lever is held either in the normal operating position or in the reference position.

This known solution suffers however from the drawback that in case of breakage of the engagement members which retain the sleeve in the raised position (normal operating position), the dog carried by the lower sleeve may come into engagement in its seat in the stationary support casing, whereby the gear shift lever is undesirably locked.

It is therefore the object of the present invention to provide a hand-operated gear shift device for a motor-vehicle gearbox provided with a locking mechanism for locking the lever in a given reference position, which is not affected by the drawback of the prior art discussed above.

This object is fully achieved according to the invention by a hand-operated gear shift device for a motor-vehicle gearbox having the characteristics specified in the characterizing portion of claim 1.

By virtue of the fact that in a hand-operated gear shift device for a motor-vehicle gearbox according to the invention the lower sleeve is not only axially slidable but also rotatable, preferably through 90 degrees, around the axis of the gear shift lever to move between the normal operating position of the lever and the reference or adjustment position, should the lower sleeve accidentally be released and urged downwards by the biasing force of the spring, the dog could not come into engagement in its seat in the support casing and therefore could not hinder the movement of the gear shift lever.

Further characteristics and advantages of the present invention will become apparent from the following detailed description, given purely by way of non-limiting example with reference to the attached drawings, in which:
Figure 1 is a perspective view of a hand-operated gear shift device for a motor-vehicle gearbox according to a preferred embodiment of the present invention;
Figure 2 is a front elevation view of the device of Figure 1;
Figures 3 and 4 are a perspective view and a side elevation view, respectively, which show in detail the lower portion of the gear shift lever of the device of Figure 1, in the condition in which the lever is locked in the reference position;
Figure 5 is a perspective view showing in detail the gear shift lever of the device of Figure 1, in the condition in which the lower sleeve of the gear shift lever is raised relative to the reference position; and
Figure 6 is a similar view to the one of Figure 5, yet relating to the normal operating condition of the gear shift lever, in which the lower sleeve is raised and rotated 90 degrees relative to the reference position.

In the description and the claims which follow, terms such as "longitudinal" or "transverse", "front" or "rear", "upper" or "lower", "horizontal" or "vertical", are to be intended as referred to the mounted condition of the gear shift device on the motor vehicle.

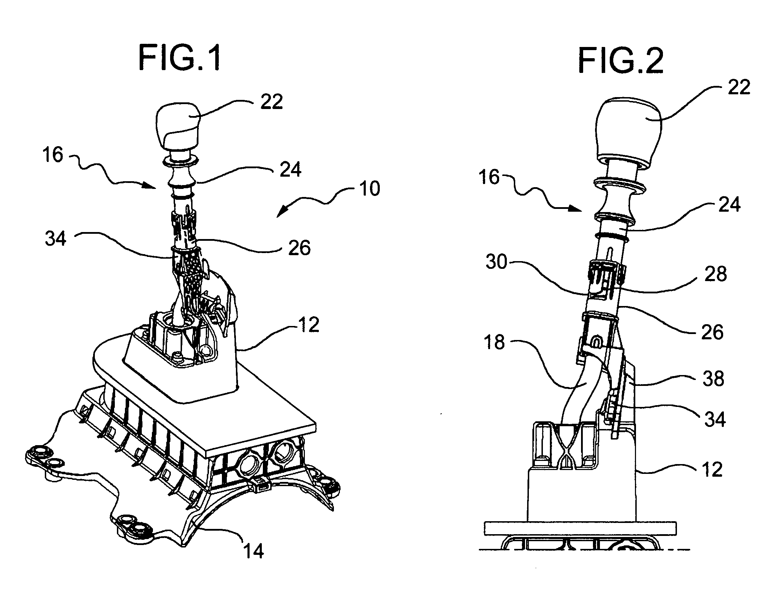

With reference first to Figure 1, a hand-operated gear shift device for a motor-vehicle gearbox according to the present invention is generally indicated 10.

The gear shift device 10 comprises in a per se known manner a support casing 12, intended to be fixed to a stationary part 14 of the passenger compartment of the motor vehicle, such as for example the middle tunnel between the two front seats, and a gear shift lever 16, supported on the support casing 12 by means of a ball joint so as to be able to perform the required movements for selection and engagement of the gears.

The gear shift lever 16 comprises a rod 18, preferably made of metal, with a substantially vertical upper straight section (not directly visible in the figures), projecting upwards from the support casing 12, a lower straight section (not shown) contained within the support casing 12 and extending parallel to the first section, and an intermediate S-shaped section which connects the two straight sections. However, the rod 18 could also consist of a single straight section.

A ball element 20 is fitted on the lower straight section and forms the ball joint which connects the rod 18 with the support casing 12. A knob 22 on which the driver can act in order to impart commands to the gear shift lever 16 is mounted at the free end of the upper straight section of the rod 18. On the upper straight section of the rod 18 are also mounted an upper sleeve 24, which is fixed with respect to the rod 18, and a lower sleeve 26, which can slide in the axial direction of the rod 18, that is, substantially vertically, and rotate through a given angle, preferably 90 degrees, around the axis of the upper straight section of the rod 18.

A spring 28, preferably a helical spring, is interposed between the stationary upper sleeve 24 and the movable lower sleeve 26 and biases the lower sleeve downwards.

The two sleeves 24 and 26 also have respective guide and retaining members which guide and limit the movement of the movable lower sleeve mobile 26 relative to the stationary upper sleeve 24. These guide and retaining members include a pair of U-shaped notches 30, provided on diametrically opposite sides in an upper cylindrical portion of the movable lower sleeve 26, and a pair of protrusions 32 of substantially T-shaped cross-section, which projects laterally on diametrically opposite sides from a lower cylindrical portion of the stationary upper sleeve 24 and slidably engage each in a respective notch 30.

Each notch 30 has a pair of vertical straight slits 30a and 30b connected to one another at their lower ends by a horizontal straight slit 30c extending preferably over an angle of 90 degrees. The two vertical slits 30a, 30b on the one hand and the horizontal slit 30c on the other serve to guide and limit the axial sliding movement and the rotational movement, respectively, of the movable lower sleeve 26, as will be better explained in the following part of the description.

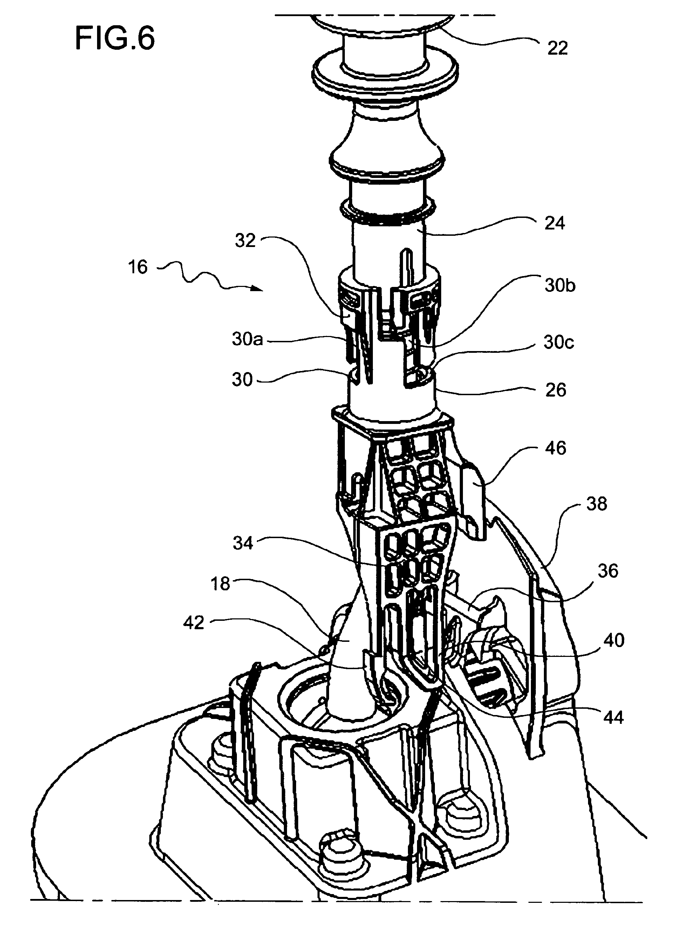

In order to keep the gear shift lever 16 locked in a reference position, the lower sleeve 26 is also provided with a male stop element 34 arranged to releasably engage in a suitable female stop element 36 provided in a barrier 38 which projects upwards from a side of the support casing 12 and extends longitudinally. The male stop element 34 is formed by a first, substantially rigid tooth 40, which extends downwards from a side of a lower square portion of the lower sleeve 26, and by a second resilient tooth 42, which extends substantially parallel to the first one and is arranged to snap-engage with the female stop element 36. As can be seen in Figure 6, the first tooth 40 is provided with a resilient tab 44 having the function to take up the play in the transverse direction, that is, in the direction of the selection movement of the gear shift lever 16, between the male stop element 34 and the female stop element 36. On the other hand, a certain play, for example equal to about 1 mm, is preferably left between the male stop element 34 and the female stop element 36 in the longitudinal direction, that is, in the direction of the engagement movement of the gear shift lever 16, so as to ease the coupling of the two stop elements 34 and 36 with one another and to take up possible fitting errors between the control cable (not illustrated) connected to the gear shift lever 16 and the gearbox casing.

On a side of the lower square portion of the movable lower sleeve 26 adjacent the side from which the male stop element 34 projects, a reverse inhibition tooth 46 is formed, which is arranged to co-operate in per se known manner with the side barrier 38 to avoid an undesired engagement of the reverse gear during the normal actuation of the gear shift lever 16.

The operation of the gear shift lever and in particular of the locking mechanism intended to ensure the locking of the lever in the reference position will be briefly illustrated here below.

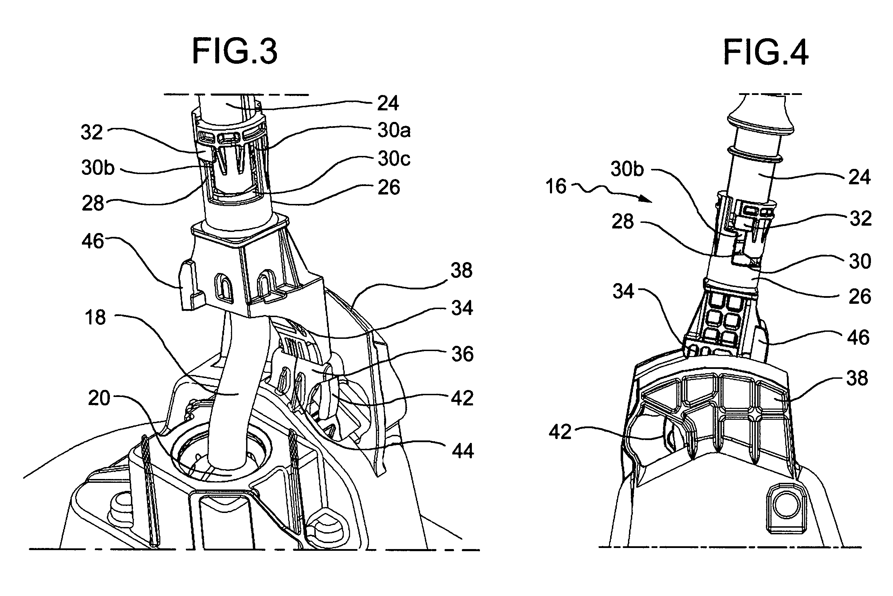

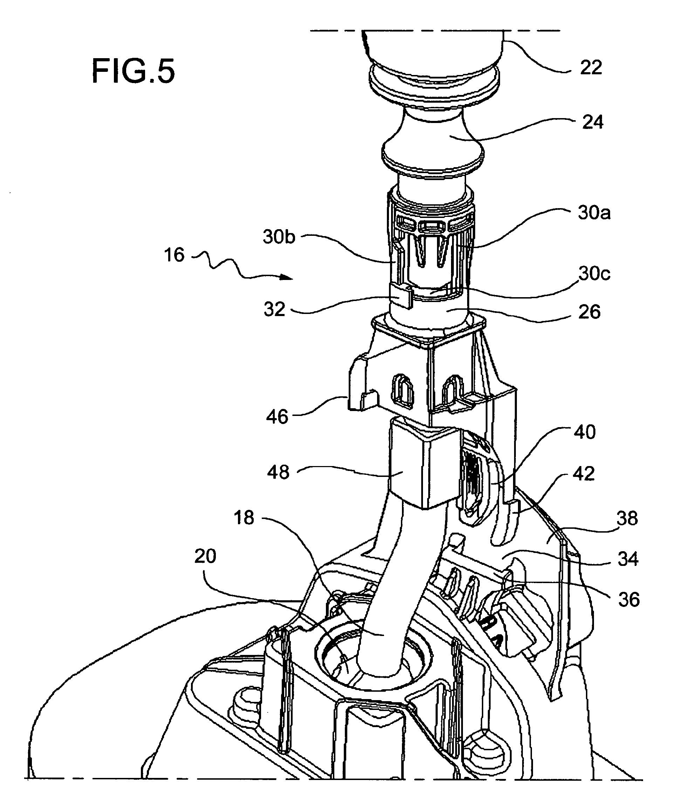

In the normal operating condition of the gear shift lever 16, shown in Figure 6, the lower sleeve 26 is rotated 90 degrees relative to the reference position, shown in Figures 2 to 4, and is held by the elastic downward force exerted by the spring 28 in a lower end-travel position, in which the two protrusions 32 of the upper sleeve 24 abut against the upper ends of the branches 30a of the two notches 30 of the lower sleeve 26. As can be easily understood, should even the protrusions 32 which retain the lower sleeve 26 accidentally break, there would be no risk of jamming of the gear shift lever 16 anyway. In fact, first of all the sliding movement of the lower sleeve 26 along the rod 18 would be limited by a square element 48 (Figure 5) fixed to the rod 18 on the bottom of the upper straight section and in any case the male stop element 34 could not engage in the female stop element 36, being it rotated with respect to this latter. Therefore, the gear shift lever 16 could still be used.

In order to move the gear shift lever 16 to the reference position to perform the adjustment of the gearbox during the assembly of the motor vehicle or during possible subsequent servicing interventions, it is first of all necessary to move the lower sleeve 26 upwards to an upper end-travel position, in which the protrusions 32 abut against the ends of the vertical slits 30a of the notches 30, at the same height as the horizontal slits 30c. It is therefore necessary to rotate the lower sleeve 26 90 degrees counter clockwise to the angular position shown in Figure 5, in which the protrusions 32 abut against the ends of the horizontal slits 30c of the notches 30 on the bottom of the vertical slits 30b. In this position, the two male and female stop elements 34 and 36 are aligned in the direction of sliding of the lower sleeve 26, that is, in a substantially vertical direction. If the lower sleeve 26 is now released, it slides downwards along the rod 18 as a result of the elastic force of the spring 28 and the male stop element 34 snap-engages into the female stop element 36 formed by the support casing 12, as shown in Figures 2 to 4. The locking of the gear shift lever in this position (adjustment position) is ensured by the engagement of the two stop elements 34 and 36 with one another.

In order to bring the gear shift lever back to the normal operating condition, it is first of all necessary to disengage the male stop element 34 from the female stop element 36, by acting on the second resilient tooth 42, and to cause the lower sleeve 26 to perform in the opposite direction the same movements as the ones described above, that is, to move upwards, to rotate 90 degrees clockwise and finally to slide downwards under the action of the spring 28.

Naturally, the principle of the invention remaining unchanged, the embodiments and details of construction can be varied widely with respect to those described and illustrated purely by way of non-limiting example.

For example, the two male and female stop elements could be exchanged, in that the male element could be provided on the support casing and the female element could be provided on the movable lower sleeve of the gear shift lever. Likewise, also the two notches and the respective protrusions could be exchanged, in that the notches could be provided on the stationary upper sleeve (having in this case an inverted U shape) and the protrusions could be formed by the movable lower sleeve.

## Claims

1. Hand-operated gear shift device (10) for a motor-vehicle gearbox, comprising a stationary support casing (12) and a gear shift lever (16) supported on the support casing (12), the gear shift lever (16) including
a rod (18) having an upper straight section,
a first sleeve (26) which is mounted on the upper straight section of the rod (18), so that it can slide along the axis of this section between a lower end-travel position and an upper end-travel position, and is provided with a first stop element (34) arranged to releasably engage a second stop element (36) provided on the stationary support casing (12) so as to lock the gear shift lever (16) in a predetermined reference position, and
guide and retaining means (30, 32) for guiding and limiting the sliding movement of the first sleeve (26) between the lower and upper end-travel positions,
the device being **characterized**
**in that** the first sleeve (26) is also arranged to rotate around the axis of the upper straight section of the rod (18) between a first angular position, in which the first stop element (34) is aligned with the second stop element (36) in the direction of sliding of the first sleeve (26), and a second angular position, in which the first stop element (34) is rotated through a predetermined angle with respect to the second stop element (36), and
**in that** said guide and retaining means (30, 32) are also arranged to guide and limit the rotational movement of the first sleeve (26) between the first and second angular positions,
in such a manner that the movement of the first sleeve (26) from the reference position to a normal operating position of the gear shift lever (16) consists, in sequence, of a translation from the lower end-travel position to the upper end-travel position, of a rotation from the first angular position to the second angular position and of a translation from the upper end-travel position to the lower end-travel position.

2. A device according to claim 1, wherein said guide and retaining means (30, 32) arranged to guide and limit the sliding movement between the lower and upper end-travel positions and the rotational movement between the first and second angular positions comprise at least one U-shaped notch (30), provided on the first sleeve (26) or on a part (24) drivingly connected to the rod (18), and at least one protrusion (32), formed by said part (24) drivingly connected to the rod (18) or by the first sleeve (26), respectively, said at least one notch (30) having a pair of vertical straight slits (30a, 30b) connected to one another at first ends thereof by a horizontal straight slit (30c) which extends through an angle corresponding to the distance between the first and second angular positions.

3. A device according to claim 2, wherein said part (24) drivingly connected to the rod (18) is formed by a second sleeve (24) fixed to the upper straight section of the rod (18) above the first sleeve (26).

4. A device according to claim 3, wherein the first sleeve (26) has a pair of U-shaped notches (30) disposed on diametrically opposite sides, and wherein the second sleeve (24) forms a pair of protrusions (32) which project laterally on diametrically opposite sides and slidably engage each in a respective notch (30).

5. A device according to any of the preceding claims, wherein the angle comprised between the first and second angular positions of the first sleeve (26) is substantially equal to 90 degrees.

6. A device according to any of the preceding claims, further comprising a spring (28) mounted on the rod (18) for urging the first sleeve (26) towards the lower end-travel position.

7. A device according to any of the preceding claims, wherein the rod (18) of the gear shift lever (16) further comprises a lower straight section and an intermediate S-shaped section which joins the two straight sections.

8. A device according to any of the preceding claims, wherein the first stop element (34) is a male element and the second stop element (36) is a female element.

9. A device according to claim 8, wherein the first stop element (34) is a tooth element (40, 42) arranged to snap-engage with the second stop element (36).

10. A device according to claim 8 or claim 9, wherein between the first and second stop elements (34, 36) there is provided a play in the longitudinal direction, that is, in the direction of the engagement movement of the gear shift lever (16).

11. A device according to any of claims 8 to 10, wherein the first and second stop elements (34, 36) are provided with means (44) for taking up the play in the transverse direction, that is, in the direction of the selection movement of the gear shift lever (16).
